# EUROPEAN PATENT SPECIFICATION

(11) **EP 2 520 616 B1**
(45) Date of publication and mention of the grant of the patent: **26.04.2017**
(21) Application number: 10841111.7
(22) Date of filing: 13.09.2010
(51) Int. Cl.: C08L 51/04, C08L 33/08, C08K 3/08, C08L 101/00

(54) **SILICON-BASED IMPACT MODIFIER CONSISTING OF A GRAFT COPOLYMER HAVING A CORE-SHELL STRUCTURE, AND THERMOPLASTIC COMPOSITION HAVING SAME**
AUF SILIZIUM BASIERENDER ELASTIFIKATOR AUS EINEM PFROPFCOPOLYMER MIT KERN-HÜLLE-STRUKTUR UND THERMOPLASTISCHE ZUSAMMENSETZUNG DAMIT
ADJUVANT DE RÉSISTANCE AUX CHOCS À BASE DE SILICIUM CONSTITUÉ D'UN COPOLYMÈRE GREFFÉ AYANT UNE STRUCTURE NOYAU-ENVELOPPE, ET COMPOSITION THERMOPLASTIQUE COMPRENANT CELUI-CI

(30) Priority: 30.12.2009 KR 20090134758
(43) Date of publication of application: 07.11.2012
(73) Proprietor: Samsung SDI Co., Ltd., Giheung-gu Yongin-si, Gyeonggi-do (KR)
(72) Inventor: MOON, Hyung Rang, Uiwang-si Gyeonggi-do 437-711 (KR); KIM, Ju Sung, Uiwang-si Gyeonggi-do 437-711 (KR); LEE, Yun Kyu, Uiwang-si Gyeonggi-do 437-711 (KR); KIM, Yu Ho, Uiwang-si Gyeonggi-do 437-711 (KR); KIM, Il Jin, Uiwang-si Gyeonggi-do 437-711 (KR); KWON, Kee Hae, Uiwang-si Gyeonggi-do 437-711 (KR); LEE, Han Su, Uiwang-si Gyeonggi-do 437-711 (KR); KIM, Mi Sun, Uiwang-si Gyeonggi-do 437-711 (KR); CHANG, Ki Bo, Uiwang-si Gyeonggi-do 437-711 (KR)
(74) Representative: Lang, Johannes
(86) International application number: PCT/KR2010/006231
(87) International publication number: WO 2011/081278

(56) References cited:
- EP-A1- 1 615 965
- JP-A- 10 017 762
- KR-B1- 100 709 878
- US-A- 4 939 205
- US-A- 5 804 655
- US-B1- 6 545 089

## Description

### Cross-Reference to Related Applications

This application is a continuation-in-part of International Application No. PCT/KR2010/006231, filed September 13, 2010, pending, which designates the U.S., published as WO 2011/081278, and claims priority therefrom under 35 USC Section 120. This application also claims priority under 35 USC Section 119 from Korean Patent Application No. 10-2009-0134758, filed December 30, 2009, in the Korean Intellectual Property Office.

### Field of the Invention

The present invention relates to a silicone-based impact modifier comprising a graft copolymer having a core-shell structure and a thermoplastic resin composition including the same.

### Background of the Invention

Impact modifiers are widely employed to provide or improve impact resistance of thermoplastic resins. Many impact modifiers include a thermoplastic resin having a core-shell structure, which aims to prevent aggregation of core particles formed of rubber particles and to improve compatibility of core particles and thermoplastic resins.

Impact modifiers can have a silicone-based rubber component as a core material. Unlike diene-based impact modifiers, silicone-based impact modifiers do not have a carbon-carbon double bond and thus can have an extremely low glass transition temperature. As a result, silicone-based impact modifiers can have superior thermal stability, chemical resistance and impact modifying effect at low temperatures. Methyl methacrylate copolymers and polystyrene acrylonitrile copolymers are examples of materials that have been used to form a shell of a silicone-based impact modifier.

When an impact modifier having a silicone-based rubber component as a core is added to resins with a high refractive index, such as polycarbonate, there can be a large difference between the refractive indexes of the base resin and the impact modifier. Also the rubber particle size can be several hundreds of nanometers. Thus goods manufactured using such compositions may become hazy or opaque, or can have poor coloring properties. Thus, there have been attempts to improve the refractive index of the impact modifier.

Korean Patent Publication No. 2007-0069703 discloses a method for improving refractive index of an impact modifier using rubber particles produced by cross-linking styrene-based aromatic compounds and alkyl acrylates in the presence of organosiloxane copolymer particles as a core, and using vinyl-based monomers and unsaturated carboxylic acids as a shell

Japanese Patent Publication No. 1998-017762 discloses the use of inorganic acrylic compounds having a high refractive index such as phenyl methacrylate and the like in a shell to improve refractive index

### Summary of the invention

The present invention provides a silicone-based impact modifier comprising a graft copolymer having a core-shell structure. The silicone-based impact modifier can have an improved refractive index and can provide superior exterior properties to a thermoplastic resin composition including the same.

The silicone-based impact modifier of the present invention includes a core comprising a silicone-based rubber and alkyl acrylate and a shell structure grafted onto the core comprising inorganic acrylic compounds

The weight ratio of the core to the shell can be 50:50 to 90:10.

The core can include 10 to 80 % by weight of a silicone-based rubber and 20 to 90 % by weight of alkyl acrylate.

The shell can include 10 to 100 % by weight of inorganic acrylic compounds.

The graft copolymer can include the inorganic acrylic compound in an amount of 10 to 50 % by weight, based on the total weight of the graft copolymer having the core-shell structure.

The silicone-based compound can include a cyclic organosiloxane. Examples of the silicone-based compound can include without limitation silicone-based rubbers produced by cross-linking hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, and the like, and combinations thereof.

Examples of the alkyl acrylate can include without limitation methyl acrylate, ethyl acrylate, n-propyl acrylate, n-butyl acrylate, 2-ethylhexyl acrylate, hexylmetacrylate, 2-ethylhexylmetacrylate, and the like, and combinations thereof.

The inorganic acrylic-based compound includes an inorganic metal and an acrylic-based compound. Examples of the inorganic metal include without limitation zinc, zirconium, hafnium, titanium, yttrium, cerium, indium, potassium, aluminum, magnesium, calcium, and the like, and combinations thereof. Examples of the acrylic-based compound include without limitations acrylates, methacrylates, carboxylethyl acrylates, derivatives thereof, and the like, and combinations thereof.

The shell may include the inorganic acrylic-based compound and further include one or more other compounds. Examples of the other compounds include without limitation alkyl acrylates, alkyl methacrylates, aromatic vinyl compounds, aromatic vinyl-vinyl cyanide mixtures, and the like, and combinations thereof.

The graft copolymer having the core-shell structure according to the present invention can have a refractive index of 1.410 to 1.590.

Further, the present invention provides the thermoplastic resin comprising 100 parts by weight of a thermoplastic resin (A) and 1 to 30 parts by weigh of the silicone-based impact modifier (B) according to the present invention.

Examples of the thermoplastic resin include without limitation polystyrene (PS) resins, acrylonitrile-butadiene-styrene copolymer (ABS) resins, rubber modified polystyrene (HIPS) resins, acrylonitrile-styrene copolymer (SAN) resins, methyl methacrylate-butadiene-styrene copolymer (MBS) resins, acrylonitrile-ethylacrylate-styrene copolymer (AES) resins, polycarbonate (PC) resins, polyphenylene ether (PPE) resins, polyolefin resins such as polyethylene (PE) resins and polypropylene (PP) resins, polyester resins such as polyethylene terephthalate (PET) resins and polybutylene terephthalate (PBT) resins, polyvinylchloride (PVC) resins, polymethylmethacrylate (PMMA) resins, polyamide (PA)-based resins, and the like, and combinations thereof.

The thermoplastic resin according to the present invention may further include 0.1 to 50 parts by weight of one or more additives. Examples of the additives include without limitation flame-retardants, lubricants, antibiotics, mold release agents, nucleating agents, plasticizers, thermal stabilizers, antioxidants, light stabilizers, compatibilizing agents, pigments, dyes, inorganic additives, and the like, and combinations thereof.

Further, the present invention provides a plastic article manufactured from the thermoplastic resin composition according to the present invention.

Hereinafter, the present invention will be described in detail.

### Detailed Description of the Invention

The present invention will be described more fully hereinafter in the following detailed description of the invention, in which some but not all embodiments of the invention are described. Indeed, this invention may be embodied in many different forms and should not be construed as limited to the embodiments set forth herein; rather, these embodiments are provided so that this disclosure will satisfy applicable legal requirements.

The present invention provides a silicone-based impact modifier comprising a graft copolymer having a core-shell structure, wherein the core comprises a silicone-based rubber and alkyl acrylate and the shell comprises an inorganic acrylic-based compound.

The refractive index of the silicone-based impact modifier according to the present invention can be improved by introducing an inorganic acrylic-based compound into a shell of a graft polymer.

When there is a large difference between the refractive indexes of an impact modifier and a base resin, goods manufactured using the same may become opaque or hazy and the coloring of the same can be poor. However, these problems can be improved remarkably when the silicone-based impact modifier according to the present invention is added to a resin since the refractive index difference between the silicone-based impact modifier and a base resin can be small. Further, the existing properties of a base resin may be kept intact since the silicone-based impact modifier according to the present invention can have superior compatibility with a base resin.

In the present invention, the core-shell graft copolymer can include a weight ratio of the core of the graft copolymer to the shell of 50:50 to 90:10.

If the amount of the core component is less than an amount within the above range, the effect of impact modification may decline due to reduced rubber content. In contrast, if the amount of the core component is more than an amount within the above range, rubber particles may aggregate together due to the reduced amount of the shell, and impact strength and refractive index may decline due to reduced compatibility with a resin.

The silicone-based rubber is included in a core. The core may be produced using a cyclosiloxane (or cyclic organosiloxane) compound. Examples of the cyclosiloxane compound may include without limitation hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, and the like. One or more siloxanes among the siloxanes may be selected and used to manufacture a silicone-based rubber.

Examples of the alkyl acrylate included in a core may include without limitation methyl acrylate, ethyl acrylate, n-propyl acrylate, n-butyl acrylate, 2-ethylhexyl acrylate, hexylmethacrylate, 2-ethylhexylmethacrylate, and the like, and combinations thereof. In exemplary embodiments, the alkyl acrylate is n-buthyl acrylate.

The core includes a rubber component which may be produced by polymerizing the silicone-based rubber, the alkyl acrylate and a cross-linking agent.

Examples of the cross-linking agent may include without limitation allyl methacrylate, triallyl cyanurate, triallyl isocyanurate, divinylbenzene and the like, and combinations thereof, and may be utilized as a cross-linking agent to polymerize the alkyl acrylate. In exemplary embodiments, the cross-linking agent may include allyl methacrylate or triallyl isocyanurate (which can have superior thermal stability). The cross-linking agent of the present invention can be used in an amount of 0.01 to 10 parts by weight based on the total weight of reactants of the core, for example 0.01 to 5 parts by weight.

The core of the silicone-based impact modifier according to the present invention can include 10 to 80% by weight of a silicone-based rubber and 20 to 90 % by weight of alkyl acrylate.

If the amount of the silicone-based rubber is less than an amount within the above range, the impact modifying effect may be decreased dramatically at low temperatures. If the amount of the silicone-based rubber is more than an amount within the above range, the refractive index of the whole impact modifier can be lowered, which can reduce coloring property when it is added to a resin and the cost of production may also be increased.

Further, grafting efficiency of a shell may be decreased if the amount of the alkyl acrylate is less than an amount within the above range. If the amount of the alkyl acrylate is more than an amount within the above range, the amount of the silicone-based rubber can be lowered relatively, and the impact modifying effect at low temperatures can be decreased, rubber particles can aggregate due to the lowered amount of a shell, impact modifying effect may be reduced due to lowered compatibility, and refractive index may also be lowered.

The average particle diameter of the core can be 0.05 to 1µm, which can help maintain a balance of impact resistance and coloring property.

A monomer forming the shell on the core is graft-polymerized and forms the graft copolymer of the core-shell structure. The shell may be formed by an inorganic acrylic-based compound or by the combination of one or more inorganic acrylic-based compounds and/or other monomers graft-polymerized with the core. Examples of other monomers forming the shell may include without limitation acrylic-based monomers, vinyl-based monomers, and the like, and combinations thereof. In the present invention, the refractive index of the shell can be improved by using inorganic compounds as compounds forming the shell

In another embodiment of the present invention, the shell may be graft-polymerized by adding inorganic acrylic-based compounds and optionally other compounds to adjust the polymerization reaction and the refractive index to appropriate levels. Examples of the other compounds that can be added in this step include without limitation of alkyl acrylates, alkyl methacrylates, aromatic vinyl compounds, aromatic vinyl-vinyl cyanide mixtures, and the like, and combinations thereof.

Examples of alkyl acrylates and alkyl methacrylates include without limitation C1-C10 alkyl acrylates and C1-C10 alkyl methacrylates, such as methyl(meth)acrylate, ethyl(meth)acrylate, and butyl(meth)acrylate, and the like, and combinations thereof. Examples of aromatic vinyl compounds include without limitation styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene and the like, and combinations thereof. Examples of vinyl cyanide compounds include without limitation acrylonitrile, ethacrylonitrile, methacrylonitrile, and the like, and combinations thereof.

The inorganic acrylic-based compound of the shell may comprise inorganic metals and acrylic-based compounds. Examples of the inorganic metals may include without limitation zinc, zirconium, hafnium, titanium, yttrium, cerium, indium, potassium, aluminum, magnesium, calcium, and the like, and combinations thereof. Examples of the acrylic-based compounds may include without limitation acrylates, methacrylates, carboxylethylacrylates, derivatives thereof, and the like, and combinations thereof. In exemplary embodiments, the inorganic metal can have a high refractive index, such as zinc, zirconium, hafnium or titanium.

Examples of the inorganic acrylic-based compound include without limitation zinc acrylate, zinc methacrylate, zirconium acrylate, zirconium methacrylate, titanium acrylate, titanium methacrylate, zirconium carboxyethyl acrylate, hafnium carboxyethyl acrylate, zirconium bromoenol lactone carboxylate, triacrylate and the like, and mixtures thereof.

The shell can include 10 to 100 % by weight of the inorganic acrylic-based compound. Further, according to some embodiments of the present invention.

If the amount of the inorganic acrylic-based compound is less than 10 % by weight of the shell, the refractive index may be less than required.

The graft copolymer comprising the core-shell structure can include 10 to 50 % by weight of the inorganic acrylic-based compounds, based on the total weight of the graft copolymer.

If the amount of the inorganic acrylic-based compounds is less than 10 % of a total weight of the graft copolymer, the refractive index of the impact modifier may be lowered.

The silicone-based impact modifier formed by the above description according to the present invention can have a refractive index of 1.410 to 1.590.

Methods of making the silicone-based impact modifier according to the present invention are not limited and the silicone-based impact modifier can be manufactured according to the methods known to those skilled in the art such as emulsion polymerization. Hereinafter, an exemplary embodiment of a manufacturing method will be described.

First, a silicone latex including a rubber core can be prepared in a dispersed aqueous solution using emulsifiers. Examples of the emulsifiers include without limitation anionic emulsifiers such as sodium, ammonium, and potassium salts, and the like, and combinations thereof, such as alkyl sulfates having 4 to 30 carbons. Examples of alkyl sulfates include without limitation sodium dodecylsulfate, sodium dodecylbenzensulfonate, and the like, and combinations thereof. In exemplary embodiments, the emulsifier can be sodium dodecylbenzensulfonate, which is available in a broad pH range. The emulsifiers can be used in an amount of 0.1 to 5 parts by weight based on the total amount or weight of reactants, for example 0.1 to 2 parts by weight based on the total weight of reactants.

Under a stream of nitrogen, alkyl acrylate and cross-linking agents are mixed and added into the silicone latex. The mixture is heated to a temperature of 50 to 100 °C.

Then, a plastic shell is manufactured by copolymerizing acrylic-based and/or vinyl-based monomers comprising inorganic compounds with a polymerization initiator.

An example of the polymerization initiator is a free radical initiator that generates free radicals by thermal decomposition or oxidation-reduction reaction. Examples of the polymerization initiator include without limitation potassium persulfate, magnesium persulfate, benzoyl peroxide, hydrogen peroxide, dibenzoyl peroxide, cumene hydroperoxide, tert-butyl hydroperoxide, diisopropylbenzene, hydroperoxide and the like, and combinations thereof. The polymerization initiator may be utilized in an amount of 0.01 to 5 parts, for example 0.1 to 2 parts, by weight based on the total amount or weight of the reactants of the shell.

The graft copolymerization is progressed by adding mixtures of acrylic-based and/or vinyl-based monomers comprising copolymerization initiators and inorganic acrylic-based compounds into a latex including rubber particles at a constant speed at a temperature of 50 to 100°C. If necessary, cross-linking agents may be added and mixed. Examples of the cross-linking agents include without limitation allyl methacrylate, triallylcyanurate, triallyl isocyanulate, divinylbenzene and the like, and combinations thereof.

The silicone-based impact modifier can be obtained using coagulants in accordance with conventional coagulation, filtration and drying steps. The coagulant can be a metallic salt. Examples of the metallic salts include without limitation magnesium chloride, calcium chloride, magnesium sulfate, aluminum sulfate and the like, and combinations thereof.

Further, the present invention provides a composition including (A) 100 parts by weight of a thermoplastic resin and (B) 1 to 30 parts by weight of the silicone-based impact modifier comprising the graft copolymer having the core shell structure according to the present invention (wherein the amount of silicone-based impact modifier (B) is based on 100 parts by weight of the thermoplastic resin (A)).

Examples of the thermoplastic resin include without limitation polystyrene (PS) resins, acrylonitrile-butadiene-styrene copolymer (ABS) resins, rubber modified polystyrene (HIPS) resins, acrylonitrile-styrene-acrylate copolymer (ASA) resins, acrylonitrile-styrene copolymer (SAN) resins, methylmethacrylate-butadiene-styrene (MBS) copolymer resins, acrylonitrile-ethylacrylate-styrene (AES) copolymer resins, polycarbonate (PC) resins, polyphenylene ether (PPE) resins, polyolefin resins such as polyethylene (PE) resins and polypropylene (PP) resins, polyester resins such as polyethylene terephthalate (PET) resins and polybutylene terephthalate (PBT) resins, polyvinylchloride (PVC) resins, polymethylmethacrylate (PMMA) resins, polyamide (PA)-based resins, and the like, and combinations thereof.

In exemplary embodiments, the thermoplastic resin (A) can be a polycarbonate (PC) resin since the silicone-based impact modifier (B) comprising the graft copolymer having a core-shell structure according to the present invention has a high refractive index and accordingly the difference between the refractive index of the base resin and the impact modifier can be reduced.

The thermoplastic resin composition according to the present invention may further comprise 0.1 to 50 parts by weight of one or more additives, based on 100 parts by weight of the thermoplastic resin (A). Examples of the additives may include without limitation flame-retardants, lubricants, antibiotics, mold release agents, nucleating agents, plasticizers, thermal stabilizers, antioxidants, light stabilizers, compatibilizing agents, pigments, dyes, inorganic addictives and the like and combinations thereof.

Further, the present invention provides a plastic article manufactured from the thermoplastic resin composition according to the present invention. The plastic article can be produced using molding techniques known in the art.

### Examples

### Example 1A: Manufacture of impact modifier powder

90 g of a cross-linked dimethylsiloxane copolymer having a refractive index of 1.429, a particle size of 220 nm, and 65 % toluene-insoluble, and 3.4 g of sodium dodecyl benzene sulfate are mixed in water with 92.9 parts by weight of a silicone latex dispersed in 970 g of distilled water, 5 parts by weight of butyl acrylate, a cross-linking agent triallyl isocyanurate and an initiator diisopropylbenzene hydroperoxide. Then, ethylenediaminetetraacetic acid, disodium salt (EDTA•2Na, YASUDA Chemicals Co., Ltd.), ferrous sulfate (SaeHan PNG, Ltd.) and sodium formaldehyde sulfoxylate (Korea Kett Engineering, Ltd) which act as catalysts are added and the mixture is polymerized at 60°C to form a core. Next, 2.1 parts by weight of zinc methacrylate (Aldrich) and an initiator diisopropylvenxene hydroperoxide are added together and a shell is formed by graft-polymerizing the same. Finally, the core-shell graft copolymer is condensed in 1 % aqueous solution of magnesium sulfate and then, impact modifier powder is obtained by washing and drying.

### Comparative Example 1A: Manufacture of impact modifier powder

The same procedure as used in Example 1A is used, except that 2.1 parts by weight of methyl methacrylate instead of zinc methacrylate (Aldrich) is used as a monomer to form the shell of the core-shell graft copolymer.

The refractive indexes of the silicone-based impact modifier particles manufactured from Example 1A and Comparative Example 1A are evaluated using a Refractometer (Metricon 2010) after compressing the powder and the results are shown in Table 1 below.

**Table 1.**

| | Example 1A | Comparative Example 1A |
|---|---|---|
| Refractive Index | 1.455 | 1.414 |

### Example 2A: Thermoplastic resin composition

4 % by weight of the impact modifier powder manufactured according to Example 1A and 1 % by weight of carbon black are added to 95 % of by weight of a polycarbonate resin (CHEIL INDUSTRIES INC., INFINO EH-1050). The composition is processed at 260°C to form a specimen.

### Comparative Example 2A: Thermoplastic resin composition

A thermoplastic resin composition is produced using the same process of Example 2A except that the impact modifier powder manufactured according to Comparative Example 1A is used instead of the impact modifier powder manufactured according to Example 1A.

The physical properties of the thermoplastic resins manufactured from Example 2A and Comparative Example 2A are evaluated using following methods and the results are described in Table 2 below.
(1) IZod impact strength is evaluated using the ASTM D-256 method. The unit is kgf.cm/cm.
(2) Coloring property of a resin: Black Index (BI): In the step of resin processing, 1 w% carbon black is added and then, expression levels of black color are quantified. A high number represents black and a low number represents white. In the other words, higher BI numbers represent a deeper black color specimen (and better coloring properties) and lower BI numbers represent a white or opaque specimen (and poorer coloring properties). BI is evaluated with a colorimeter Konica-Minolta CM3600.

**Table 2.**

| | | Example 2A | Comparative Example 2A |
|---|---|---|---|
| Izod | 1/4" | 57.2 | 59.3 |
| | 1/8" | 78.1 | 75.5 |
| Coloring properties | Eye test* | Good | Normal |
| | Black Index** | 16.1 | 9.5 |

| | | | |
|---|---|---|---|
| Eye test*: Relatively compared | | | |

As shown in Tables 1 and 2, the impact strength of the impact modifier having a refractive index of 1.455 of Example 2A and the impact modifier having a refractive index of 1.414 of Comparative Example 2A are similar. However, the coloring property of Example 2A is superior to that of Comparative Example 2A. The result shows that the silicone-based impact modifier according to the present invention can maintain superior impact strength and can improve coloring property when added into a resin.

## Claims

1. A silicone-based impact modifier comprising a graft copolymer having a core-shell structure comprising:
a core comprising a silicone-based rubber and alkyl acrylate; and
a shell comprising an inorganic acrylic-based compound.

2. The silicone-based impact modifier of Claim 1, wherein the weight ratio of said core to said shell is 50:50 to 90:10.

3. The silicone-based impact modifier of Claim 1, wherein said core comprises 10 to 80 % by weight of the silicone-based rubber and 20 to 90 % by weight of the alkyl acrylate.

4. The silicone-based impact modifier of Claim 1, wherein said shell comprises 10 to 100 % by weight of the inorganic acrylic-based compound.

5. The silicone-based impact modifier of Claim 1, wherein said graft copolymer having the core-shell structure comprises 10 to 50 % by weight of the inorganic acrylic-based compound.

6. The silicone-based impact modifier of Claim 1, wherein said silicone-based rubber comprises hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, or a combination thereof.

7. The silicone-based impact modifier of Claim 1, wherein said alkyl acrylate comprises methyl acrylate, ethyl acrylate, n-propyl acrylate, n-butyl acrylate, 2-ethylhexyl acrylate, hexylmethacrylate, 2-ethylhexylmethacrylate, or a combination thereof.

8. The silicone-based impact modifier of Claim 1, wherein said inorganic acrylic-based compound comprises an inorganic metal and an acrylic-based compound, wherein the inorganic metal comprises zinc, zirconium, hafnium, titanium, yttrium, cerium, indium, potassium, aluminum, magnesium, calcium, or a combination thereof, and wherein the acrylic-based compound comprises acrylate, methacrylate, carboxylethylacrylate, a derivative thereof, or a combination thereof.

9. The silicone-based impact modifier of Claim 1, wherein said shell further comprises one or more monomers comprising an alkyl acrylate, alkyl methacrylate, aromatic vinyl compound, aromatic vinyl-vinyl cyanide mixture, or a combination thereof.

10. The silicone-based impact modifier of Claim 1, wherein the refractive index of said impact modifier is 1.410 to 1.590.

11. A thermoplastic resin composition comprising:
(A) 100 parts by weigh of a thermoplastic resin; and
(B) 1 to 30 parts by weight of a silicone-based impact modifier according to one of Claims 1 to 10.

12. The thermoplastic resin composition of Claim 11, wherein said thermoplastic resin comprises a polystyrene (PS) resin, an acrylonitrile-butadiene-styrene copolymer (ABS) resin, a rubber modified polystyrene(HIPS) resin, an acrylonitrile-styrene-acrylate (ASA) copolymer resin, an acrylonitrile-styrene copolymer (SAN) resin, a methylmethacrylate-butadiene-styrene (MBS) copolymer resin, an acrylonitrile-ethylacrylate-styrene (AES) copolymer resin, a polycarbonate (PC) resin, a polyphenylene ether (PPE) resin, a polyethylene (PE) resin, a polypropylene (PP) resin, a polyethylene terephthalate (PET) resin, a polybutylene terephthalate (PBT) resin, a polyvinyl chloride (PVC), a polymethylmethacrylate (PMMA) resin, a polyamide (PA)-based resin, or a combination thereof.

13. The thermoplastic resin composition of Claim 11, wherein said composition further comprises 0.1 to 50 parts by weight of one or more additives selected from the group consisting of flame-retardants, lubricants, antibiotics, mold release agents, nucleating agents, plasticizers, thermal stabilizers, antioxidants, light stabilizers, compatibilizing agents, pigments, dyes, inorganic addictives, and combinations thereof.

14. A plastic article manufactured from said thermoplastic resin composition of one of Claims 11 to 13.

## Patentansprüche

1. Silicon-basierter Schlagzähmodifikator, umfassend ein Pfropf-Copolymer mit einer Kern-Schale-Struktur, umfassend:
einen Kern, der einen Silicon-basierten Kautschuk und ein Alkylacrylat umfasst; und
eine Schale, die eine anorganische Acryl-basierte Verbindung umfasst.

2. Silicon-basierter Schlagzähmodifikator nach Anspruch 1, wobei das Gewichtsverhältnis des Kerns zu der Schale 50:50 bis 90:10 beträgt.

3. Silicon-basierter Schlagzähmodifikator nach Anspruch 1, wobei der Kern 10 bis 80 Gewichts-% des Silicon-basierten Kautschuks und 20 bis 90 Gewichts-% des Alkylacrylats umfasst.

4. Silicon-basierter Schlagzähmodifikator nach Anspruch 1, wobei die Schale 10 bis 100 Gewichts-% der anorganischen Acryl-basierten Verbindung umfasst.

5. Silicon-basierter Schlagzähmodifikator nach Anspruch 1, wobei das Pfropf-Copolymer mit der Kern-Schale-Struktur 10 bis 50 Gewichts-% der anorganischen Acryl-basierten Verbindung umfasst.

6. Silicon-basierter Schlagzähmodifikator nach Anspruch 1, wobei der Silicon-basierte Kautschuk Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan, Octaphenylcyclotetrasiloxan, oder eine Kombination davon umfasst.

7. Silicon-basierter Schlagzähmodifikator nach Anspruch 1, wobei das Alkylacrylat Methylacrylat, Ethylacrylat, n-Propylacrylat, n-Butylacrylat, 2-Ethylhexylacrylat, Hexylmethacrylat, 2-Ethylhexylmethacrylat, oder eine Kombination davon umfasst.

8. Silicon-basierter Schlagzähmodifikator nach Anspruch 1, wobei die anorganische Acryl-basierte Verbindung ein anorganisches Metall und eine Acryl-basierte Verbindung umfasst, wobei das anorganische Metall Zink, Zirkonium, Hafnium, Titan, Yttrium, Cer, Indium, Kalium, Aluminium, Magnesium, Calcium, oder eine Kombination davon umfasst und wobei die Acryl-basierte Verbindung Acrylat, Methacrylat, Carboxylethylacrylat, ein Derivat davon, oder eine Kombination davon umfasst.

9. Silicon-basierter Schlagzähmodifikator nach Anspruch 1, wobei die Schale weiterhin ein oder mehrere Monomere umfasst, die ein Alkylacrylat, Alkylmethacrylat, eine aromatische Vinylverbindung, ein Vinylaromat-Vinylcyanid-Gemisch, oder eine Kombination davon umfassen.

10. Silicon-basierter Schlagzähmodifikator nach Anspruch 1, wobei der Brechungsindex des Schlagzähmodifikators 1,410 bis 1,590 beträgt.

11. Thermoplastische Harzzusammensetzung umfassend:
(A) 100 Gewichtsteile eines thermoplastischen Harzes; und
(B) 1 bis 30 Gewichtsteile eines Silicon-basierten Schlagzähmodifikators gemäß einem der Ansprüche 1 bis 10.

12. Thermoplastische Harzzusammensetzung nach Anspruch 11, wobei das thermoplastische Harz ein Polystyrol(PS)-Harz, ein Acrylnitril-Butadien-Styrol-Copolymer (ABS)-Harz, ein kautschukmodifiziertes Polystyrol (HIPS)-Harz, ein Acrylnitril-Styrol-Acrylat (ASA)-Copolymer-Harz, ein Acrylnitril-Styrol-Copolymer (SAN)-Harz, ein Methylmethacrylat-Butadien-Styrol (MBS)-Copolymer-Harz, ein Acrylnitril-Ethylacrylat-Styrol (AES)-Copolymer-Harz, ein Polycarbonat (PC)-Harz, ein Polyphenylenether (PPE)-Harz, ein Polyethylen (PE)-Harz, ein Polypropylen (PP)-Harz, ein Polyethylenterephthalat (PET)-Harz, ein Polybutylenterephthalat (PBT)-Harz, ein Polyvinylchlorid (PVS), ein Polymethylmethacrylat (PMMA)-Harz, ein Polyamid (PA)-basiertes Harz, oder eine Kombination davon umfasst.

13. Thermoplastische Harzzusammensetzung nach Anspruch 11, wobei die Zusammensetzung weiterhin 0,1 bis 50 Gewichtsteile von einem oder mehreren Additiven ausgewählt aus der Gruppe bestehend aus Flammschutzmitteln, Gleitmitteln bzw. Schmiermitteln, Antibiotika, Formtrennmitteln, Nukleierungsmitteln, Plastifikatoren bzw. Weichmachern, thermischen Stabilisatoren, Antioxidationsmitteln, Lichtstabilisatoren, Kompatibilisierungsmitteln bzw. Verträglichkeitsmachern, Pigmenten, Farbstoffen, anorganischen Additiven, und Kombination davon umfasst.

14. Kunststoffgegenstand, hergestellt aus der thermoplastischen Harzzusammensetzung nach einem der Ansprüche 11 bis 13.

## Revendications

1. Modifiant choc à base de silicone, comprenant un copolymère greffé ayant une structure coeur-coque, comprenant :
un coeur comprenant un caoutchouc à base de silicone et un acrylate d'alkyle ; et
une coque comprenant un composé inorganique à base acrylique.

2. Modifiant choc à base de silicone selon la revendication 1, dans lequel le rapport en poids dudit coeur à ladite coque est de 50:50 à 90:10.

3. Modifiant choc à base de silicone selon la revendication 1, dans lequel ledit coeur comprend 10 à 80 % en poids du caoutchouc à base de silicone et 20 à 90 % en poids de l'acrylate d'alkyle.

4. Modifiant choc à base de silicone selon la revendication 1, dans lequel ladite coque comprend 10 à 100 % en poids du composé inorganique à base acrylique.

5. Modifiant choc à base de silicone selon la revendication 1, dans lequel ledit copolymère greffé ayant la structure coeur-coque comprend 10 à 50 % en poids du composé inorganique à base acrylique.

6. Modifiant choc à base de silicone selon la revendication 1, dans lequel ledit caoutchouc à base de silicone comprend
l'hexaméthylcyclotrisiloxane,
l'octaméthylcyclotétrasiloxane,
le décaméthylcyclopentasiloxane,
le dodécaméthylcyclohexasiloxane,
le triméthyltriphénylcyclotrisiloxane,
le tétraméthyltétraphénylcyclotétrasiloxane,
l'octaphénylcyclotétrasiloxane
ou une combinaison de ceux-ci.

7. Modifiant choc à base de silicone selon la revendication 1, dans lequel ledit acrylate d'alkyle comprend l'acrylate de méthyle, l'acrylate d'éthyle, l'acrylate de n-propyle, l'acrylate de n-butyle, l'acrylate de 2-éthylhexyle, le méthacrylate d'hexyle, le méthacrylate de 2-éthylhexyle ou une combinaison de ceux-ci.

8. Modifiant choc à base de silicone selon la revendication 1, dans lequel ledit composé inorganique à base acrylique comprend un métal inorganique et un composé à base acrylique, le métal inorganique comprenant le zinc, le zirconium, le hafnium, le titane, l'yttrium, le cérium, l'indium, le potassium, l'aluminium, le magnésium, le calcium ou une combinaison de ceux-ci, et le composé à base acrylique comprenant un acrylate, un méthacrylate, un carboxyléthylacrylate, un dérivé de ceux-ci ou une combinaison de ceux-ci.

9. Modifiant choc à base de silicone selon la revendication 1, dans lequel ladite coque comprend en outre un ou plusieurs monomères comprenant un acrylate d'alkyle, un méthacrylate d'alkyle, un composé vinylaromatique, un mélange vinylaromatique-cyanure de vinyle, ou une combinaison de ceux-ci.

10. Modifiant choc à base de silicone selon la revendication 1, l'indice de réfraction dudit modifiant choc étant de 1,410 à 1,590.

11. Composition de résine thermoplastique, comprenant :
(A) 100 parties en poids d'une résine thermoplastique ; et
(B) 1 à 30 parties en poids d'un modifiant choc à base de silicone selon l'une des revendications 1 à 10.

12. Composition de résine thermoplastique selon la revendication 11, dans lequel ladite résine thermoplastique comprend une résine de polystyrène (PS), une résine d'un copolymère acrylonitrile-butadiène-styrène (ABS), une résine de polystyrène modifié par un caoutchouc (HIPS), une résine d'un copolymère acrylonitrile-styrène-acrylate (ASA), une résine d'un copolymère acrylonitrile-styrène (SAN), une résine d'un copolymère méthacrylate de méthyle-butadiène-styrène (MBS), une résine d'un copolymère acrylonitrile-acrylate d'éthyle-styrène (AES), une résine de polycarbonate (PC), une résine de poly(phénylène éther) (PPE), une résine de polyéthylène (PE), une résine de polypropylène (PP), une résine de poly(téréphtalate d'éthylène) (PET), une résine de poly(téréphtalate de butylène) (PBT), une résine de poly(chlorure de vinyle) (PVC), une résine de poly(méthacrylate de méthyle) (PMMA), une résine à base de polyamide (PA) ou une combinaison de ceux-ci.

13. Composition de résine thermoplastique selon la revendication 11, ladite composition comprenant en outre 0,1 à 50 parties en poids d'un ou plusieurs additifs choisis dans le groupe consistant en les retardateurs de flamme, les lubrifiants, les antibiotiques, les agents de démoulage, les agents de nucléation, les plastifiants, les thermostabilisants, les antioxydants, les photostabilisants, les agents de compatibilisation, les pigments, les colorants, les additifs inorganiques et les combinaisons de ceux-ci.

14. Article plastique fabriqué à partir de la composition de résine thermoplastique de l'une des revendications 11 à 13.
